# FASCICULE DE BREVET EUROPEEN

(11) **EP 4 152 937 B1**
(45) Date de publication et mention de la délivrance du brevet: **28.02.2024**
(21) Numéro de dépôt: 21725549.6
(22) Date de dépôt: 18.05.2021
(51) Int. Cl.: A23B 7/154, A23B 7/16, A23L 3/16, A23L 3/3463

(54) **NOUVEAU PROCÉDÉ DE TRAITEMENT DES FRUITS ET LÉGUMES**
NEUES VERFAHREN ZUR BEHANDLUNG VON OBST UND GEMÜSE
NOVEL METHOD FOR TREATING FRUITS AND VEGETABLES

(30) Priorité: 19.05.2020 FR 2005027
(43) Date de publication de la demande: 29.03.2023
(73) Titulaire: Xeda International, 13670 Saint Andiol (FR)
(72) Inventeur: SARDO, Alberto, 13160 CHATEAURENARD (FR)
(74) Mandataire: Lavoix
(86) Numéro de dépôt international: PCT/EP2021/063114
(87) Numéro de publication internationale: WO 2021/233900

(56) Documents cités:
- EP-A1- 1 854 353
- EP-A1- 3 127 434
- WO-A2-2008/104711
- FR-A1- 2 720 011
- FR-A1- 2 728 142
- FR-A1- 2 786 664
- FR-A1- 2 791 910

## Description

La présente invention concerne un procédé de traitement de fruits ou de légumes.

En effet, il importe que les fruits et légumes ne perdent pas leur qualité organoleptique et conservent un aspect engageant lors de leur mise sur le marché pour une consommation rapide. Or, après leur récolte, et jusqu'à leur mise sur le marché, les fruits et légumes sont couramment stockés pendant des périodes relativement longues pendant lesquelles ils se déshydratent, et sont souvent victimes d'un phénomène d'oxydation superficielle, appelé échaudure.

Différents produits sont utilisés pour l'enrobage des fruits et légumes, afin d'améliorer leur aspect et leur conservation. On peut ainsi citer le produit Semperfresh^{®} à base d'ester de sucrose.

Les compositions d'enrobage sont généralement appliquées par dissolution dans l'eau au préalable puis immersion, pulvérisation ou douchage sur les fruits.

E471 est un additif alimentaire composé de mono- et diglycérides d'acides gras alimentaires. Il est largement utilisé dans l'alimentation (par exemple dans la production du pain et des viennoiseries industrielles) en raison de son innocuité. Il sert comme émulsifiant, gélifiant, antioxydant, support pour colorant et agent d'enrobage. Dans cette dernière application, il est généralement appliqué par dissolution dans l'eau puis immersion des fruits dans la solution, ou pulvérisation ou douchage de la solution sur les fruits.

Néanmoins, ces méthodes d'application sont insatisfaisantes car de l'eau est appliquée sur les fruits. De plus, les mono- et diglycérides d'acides gras présentent une viscosité élevée, ce qui rend leur application difficile. En particulier, la vaporisation des mono- et diglycérides d'acides gras dans les conditions de travail habituelles donne lieu à un enrobage inhomogène, formant des agglomérats sur les produits qui sont incompatibles avec une commercialisation et ne permettent pas une conservation satisfaisante.

De plus, certains fruits comme les fraises et les poires par exemples sont extrêmement fragiles et ne peuvent être manipulés sans les abimer, ce qui rend certains traitement impossibles (immersion, cirage, emballage individuel, etc...).

Il est donc nécessaire de mettre à disposition un procédé de traitement pour répondre à ces difficultés.

De façon inattendue, les présents inventeurs ont mis au point un procédé d'application des mono- et diglycérides d'acides gras qui permet d'améliorer la qualité de l'enrobage. De plus, ils ont mis en évidence l'activité antioxydante des mono- et diglycérides d'acides gras sur les fruits enrobés, permettant d'éviter efficacement le phénomène d'échaudure.

Ainsi, selon un premier objet, la présente invention concerne un procédé de traitement des fruits et légumes au moyen d'une composition d'enrobage, ledit procédé comprenant :
- La thermonébulisation de ladite composition à température comprise entre 250°C et 330°C
- l'application de l'aérosol de ladite composition ainsi obtenu sur lesdits fruits et légumes,
et tel que ladite composition comprend :
- un ou plusieurs mono- et diglycérides d'acides gras alimentaires, et
- Un solvant ayant une température d'ébullition comprise entre 150 et 260°C.

Il a ainsi été mis en évidence que malgré les difficultés à appliquer les mono- et diglycérides d'acides gras, ce procédé confère un enrobage homogène qui permet d'inhiber les échanges gazeux entre le fruit et l'atmosphère, freinant ainsi le métabolisme du fruit.

Le procédé selon l'invention conduit ainsi à une imperméabilisation du fruit enrobé qui donne lieu à une réduction des pertes d'eau et une nette amélioration qualitative par un effet de retard de la maturation.
Dans les conditions de température visée, le procédé selon l'invention permet d'obtenir un aérosol de bonne qualité, en formant une brume très fine correspondant à une taille de particules inférieure ou égale 10 microns environ.

Le procédé selon l'invention permet donc une couverture homogène des fruits et légumes stockés, avec un effet protecteur freinant la maturation et le brunissement (échaudure) superficiel lorsque les fruits sortent de la chambre froide et sont exposés aux conditions ambiantes.

Selon l'invention, le solvant a ici une action de vecteur des mono- et diglycérides d'acides gras à la température de nébulisation visée.

On entend par thermonébulisation, un procédé consistant à appliquer un brouillard extrêmement fin (dont les gouttelettes ont une taille de l'ordre du micromètre), lequel est produit par injection d'un liquide dans un courant d'air chaud, qui sert de véhicule à ladite composition traitante. Le brouillard ainsi produit permet une application homogène.

Cette technique est connue en soi et est décrite dans les demandes FR 98 015305 et FR 99 04534.
La thermonébulisation pourra avantageusement être mise en oeuvre par utilisation d'un thermonébulisateur, tel que décrit dans FR 87 04 960, et plus particulièrement au moyen de l'appareil ELECTROFOG^{®} commercialisé par la société XEDA INTERNATIONAL.

Le thermonébulisateur est typiquement constitué d'un ventilateur haute pression, d'une résistance électrique et d'une pompe volumétrique garantissant une régularité stricte des caractéristiques du brouillard produit et une introduction très progressive de la composition traitante dans la chambre de stockage.

De manière classique, les conditions permettant d'obtenir une taille de gouttes de 0,5 à 10 microns, notamment de l'ordre du micron, caractéristiques d'un brouillard de thermonébulisation, comprennent le chauffage de l'air à une température de 400° à 650°C avant l'injection du liquide.

FR9415329 décrit notamment la thermonébulisation à la température du brouillard à la sortie de l'appareil de thermonébulisation est avantageusement choisie de 110°C à 200°C, étant entendu qu'un brouillard particulièrement satisfaisant est obtenu à une température de sortie de l'appareil de thermonébulisation comprise entre 130 et 180°C, de préférence d'environ 160°C

L'application par thermonébulisation peut être continue ou intermittente au cours de la durée du stockage. De préférence, l'application est réalisée dans l'enceinte de stockage avant le remplissage ou répétée, tous les deux mois environ.

Néanmoins, dans ces conditions de températures de travail habituelles des thermonébulisateurs (typiquement comprises entre 110 et 200 °C, voire 240°C), il a été identifié que les mono- et diglycérides d'acides gras ne peuvent être nébulisés de façon satisfaisante.

Il n'avait encore jamais été envisagé de conduire des traitements de fruits et légumes avec des températures de nébulisation supérieures à 250°C.

De préférence, la température de thermonébulisation est comprise entre 260 et 300°C.

On entend ici par température de thermonébulisation la température du brouillard à la sortie de l'appareil de thermonébulisation.

Il est entendu que cette température de thémonébulisation est distincte de la température de chauffage de l'air par le thermonébulisateur avant l'injection du liquide.

Selon un mode de réalisation, lesdits mono- et diglycérides d'acides gras alimentaires sont les mono- et di-oléate de glycérol. De préférence, il s'agit de l'additif E471.

Il est obtenu par hydrolyse, soit à partir de graisses et produits animaux (panses de boeuf, cornes, lard, suif, ...) soit à partir d'huiles végétales (huile de palme, soja, olive, graines de coton, colza, tournesol, ...). E471 est disponible commercialement : il est notamment distribué par la Stéarinerie Dubois.

Selon un mode de réalisation, ledit solvant est choisi parmi un solvant acceptable sur le plan alimentaire, ayant une température d'ébullition comprise entre 150 et 260°C.

On peut notamment citer le monopropylène glycol.

Il est précisé ici que ladite composition d'enrobage peut comprendre plusieurs solvants, étant entendu qu'au moins un desdits solvants a une température d'ébullition comprise entre 150 et 260°C.

Ainsi, selon un mode de réalisation avantageux, la composition d'enrobage peut en outre comprendre de l'éthanol, par exemple à hauteur de 0 à 30 % (en poids de la composition).

Il a en effet été identifié par les inventeurs que la présence d'éthanol permet de réduire la viscosité à basse température afin de faciliter l'aspiration de la pompe pour l'alimentation du nébulisateur.

Selon un mode de réalisation, la composition d'enrobage comprend :
- entre 5 et 60% en poids, de préférence entre 20 et 40% en poids de mono- et diglycérides d'acides gras alimentaires, et
- entre 40 et 95% en poids, de préférence entre 50 et 70 % en poids de solvant.

Typiquement, la composition d'enrobage comprend :
- entre 20 et 40% en poids de mono- et diglycérides d'acides gras alimentaires, et
- entre 50 et 70 % en poids de solvant

Typiquement, la composition d'enrobage telle que définie ci-avant est appliquée sans dilution préalable, ou peut être dispersée dans de l'eau, notamment de l'eau chaude. Dans ce cas, les pourcentages indiqués ci-dessus s'entendent avant dilution.

Selon un mode de réalisation, ladite composition d'enrobage peut comprendre un ou plusieurs ingrédients additionnels tels que les additifs habituellement utilisés, notamment pour le traitement de fruits ou de légumes.

La composition d'enrobage peut ainsi comprendre en outre un ou plusieurs émulsifiant(s) non ionique(s), de la lécithine, huile de soja, une ou plusieurs bases, de l'eau, un ou plusieurs solvants organiques tel que les alcools et/ou un ou plusieurs émulsifiants tel que les Tween, tel que le Tween 80, les sucroesters, les alcool gras éthoxylés.

A titre de fruits et légumes, on peut notamment citer les poires, les fraises, les pommes, les pêches, les nectarines, les abricots. Le traitement des fraises et des poires est particulièrement avantageux.

La quantité de produit appliqué dépend de la quantité de fruits et légumes à traiter, ainsi que des conditions de stockage et le degré de maturité des fruits et légumes stockés et/ou souhaité. En général, on applique entre de 10 à 200 g de composition par tonne de fruits et légumes traités.

Selon un mode de réalisation, le temps de contact des fruits ou de légumes avec ladite composition est compris entre 10 secondes et 10 minutes.

Le traitement peut être réalisé au verger ou en post-récolte, de préférence en post-récolte.

Il peut être mis en oeuvre avant la mise en chambre de stockage ou dans la chambre de stockage, telle qu'une chambre froide.

L'application de ladite composition peut se faire sur les fruits et légumes stockés en caisses ou palettes, ou de préférence stockés hors caisse ou palette, avant leur commercialisation.

Les exemples suivants sont donnés à titre illustratif et non limitatif de la présente invention.

### Exemples

### 1. Préparation d'une composition d'enrobage

Pour la préparation d'1kg de produit, à 400g de l'additif alimentaire E471 sont ajoutés 400g de solvant alimentaire de point d'ébullition compris entre 150 et 260°C, tel que le monopropylèneglycol de point d'ébullition 184°C et 200g d'alcool éthylique.

### 2. Application et efficacité de la composition d'enrobage

Des essais ont été réalisés sur des poires (Abate Fetel), selon la procédure suivante : Dans une chambre réfrigérée à 2°C, les fruits ont été traités par la composition de l'exemple 1 (1.5 L de composition thermonébulisé à 295°C avec l'Electrofog^{®}), pendant que parallèlement, un échantillon de fruits (contrôle non traité) a été maintenu hors de la chambre puis restocké dans la chambre. Afin de simuler la friction et les chocs, chaque fruit a été roulé manuellement sur le sol pendant environ une minute. 8 jours plus tard (T1), 4 échantillons ont été manipulés : le contrôle, un échantillon traité à froid, un échantillon manipulé après réchauffement pendant 18 heures et un échantillon manipulé après réchauffement pendant 24 heures. Tous les échantillons ont été évalués visuellement à 8 et 9 jours, puis replacés dans l'enceinte. Une semaine plus tard (T2), deux échantillons ont été manipulés et évalués: le contrôle et un échantillon traité.

### Résultats:

Après une semaine (T1), les fruits de l'échantillon contrôle sont devenus noirs immédiatement après les chocs et la fraction.

Parmi les fruits traités, ceux manipulés à froid présentent des tâches noires, tandis que les fruits des deux échantillons qui ont été réchauffés (pendant 18h ou 24h) ne présentent pratiquement pas de dégâts.

Deux semaines plus tard (T2): les deux échantillons qui ont été manipulés à T1 et replacés dans la chambre présentent une détérioration de la qualité. Plusieurs fruits du contrôle présentent de larges taches noires en raison de la manipulation. De plus, les échantillons traités présentent plusieurs tâches noires mais les fruits ayant été manipulés après une période de réchauffement ont un meilleur aspect visuel et moins de taches noires que les fruits qui avaient été manipulés à froid.

Parmi les échantillons qui ont été manipulés et évalués à T2, les contrôles présentent quelques taches noires liées à la friction et à la manipulation, tandis que l'échantillon traité a un meilleur aspect avec un niveau de dégradation inférieur.

### Conclusions et commentaires :

L'évaluation des fruits démontre que les échantillons traités sont moins abimés que les fruits non traités.

L'efficacité de la composition semble être améliorée si l'application est répétée, pendant le stockage.

### Exemple comparatif

L'additif E471 présente une viscosité élevée (à température ambiante c'est une pâte) : il ne peut donc être nébulisé seul et doit être dilué dans un solvant pour être fluidifié.

L'additif E471 a alors été dilué dans le l'alcool éthylique dans les mêmes proportions que à l'exemple 1. Le mélange a ensuite été nébulisé dans les conditions de l'exemple 2, à température égale à 240°C.

Cette nébulisation s'est révélée infructueuse : l'additif restait pur après évaporation de l'éthanol.

## Revendications

1. Procédé de traitement des fruits et légumes au moyen d'une composition d'enrobage comprenant :
- La thermonébulisation de ladite composition à température comprise entre 250°C et 330°C
- l'application de l'aérosol de ladite composition ainsi obtenu,
et tel que ladite composition comprend :
- un ou plusieurs mono- et diglycérides d'acides gras alimentaires,
- Un solvant ayant une température d'ébullition comprise entre 150 et 260°C.

2. Procédé selon la revendication 1, tel que lesdits mono- et diglycérides d'acides gras alimentaires sont les mono- et di-oléate de glycérol.

3. Procédé selon l'une quelconque des revendications précédentes tel que ledit solvant est le monopropylène glycol.

4. Procédé selon l'une quelconque des revendications précédentes, tel que la composition comprend :
- entre 5 et 60% en poids de mono- et diglycérides d'acides gras alimentaires, et
- entre 40 et 95% en poids de solvant.

5. Procédé selon l'une quelconque des revendications précédentes, tel que la composition comprend en outre un ou plusieurs émulsifiants.

6. Procédé selon l'une quelconque des revendications précédentes, tel que la composition d'enrobage comprend en outre de l'éthanol.

7. Procédé selon l'une quelconque des revendications précédentes comprenant l'étape de nébulisation de ladite composition à température comprise entre 260 et 300°C.

8. Procédé selon l'une quelconque des revendications précédentes comprenant l'application de 10 à 200 g de composition par tonne de fruits et légumes traités.

9. Procédé selon l'une quelconque des revendications précédentes comprenant l'application dans une chambre de stockage.

10. Procédé selon l'une quelconque des revendications précédentes comprenant tel que lesdits fruits et légumes sont choisis parmi les fraises et les poires.

## Patentansprüche

1. Verfahren zur Behandlung von Obst und Gemüse mithilfe einer Beschichtungszusammensetzung, umfassend:
- Die Thermozerstäubung der genannten Zusammensetzung bei einer Temperatur zwischen 250°C und 330°C
- das Auftragen des Aerosols der genannten Zusammensetzung, das auf diese Weise erhalten wurde,
- und derart, dass die Zusammensetzung umfasst:
- ein oder mehrere Mono- und Diglyceride von Speisefettsäuren,
- Ein Lösungsmittel mit einer Siedetemperatur zwischen 150 und 260 °C.

2. Verfahren nach Anspruch 1, wobei es sich bei den Mono- und Diglyceriden von Speisefettsäuren um Glycerinmono- und -dioleat handelt.

3. Verfahren nach einem der vorhergehenden Ansprüche, derart, dass das Lösungsmittel Monopropylenglykol ist.

4. Verfahren nach einem der vorherigen Ansprüche, wobei das Verfahren Folgendes umfasst:
- zwischen 5 und 60 Gew.-% Mono- und Diglyceride von Speisefettsäuren und
- zwischen 40 und 95 Gew.-% Lösungsmittel.

5. Verfahren nach einem der vorherigen Ansprüche, wobei die Zusammensetzung ferner einen oder mehrere Emulgatoren umfasst:

6. Verfahren nach einem der vorherigen Ansprüche, wobei die Beschichtungszusammensetzung ferner Ethanol umfasst.

7. Verfahren nach einem der vorhergehenden Ansprüche, umfassend den Schritt der Zerstäubung der Zusammensetzung bei einer Temperatur zwischen 260 und 300 °C.

8. Verfahren nach einem der vorhergehenden Ansprüche, bei dem 10 bis 200 g der Zusammensetzung pro Tonne behandeltes Obst und Gemüse aufgebracht werden.

9. Verfahren nach einem der vorhergehenden Ansprüche, das die Anwendung in einer Lagerkammer umfasst.

10. Verfahren nach einem der vorhergehenden Ansprüche, wobei das Obst und Gemüse aus Erdbeeren und Birnen ausgewählt wird.

## Claims

1. A treatment process for treating fruits and vegetables by means of a coating composition, the said process including:
- the thermal fogging of the said composition at a temperature comprised between 250°C and 330°C;
- the application of the aerosol of the said composition thus obtained;
and such that the said composition comprises:
- one or more mono- and diglycerides of dietary fatty acids,
- a solvent having a boiling point temperature of between 150 and 260°C.

2. A process according to claim 1, such that the said mono- and diglycerides of dietary fatty acids are the mono- and di-oleate of glycerol.

3. A process according to any one of the preceding claims such that the said solvent is monopropylene glycol.

4. A process according to any one of the preceding claims, such that the composition comprises:
- between 5 and 60% by weight of mono- and diglycerides of dietary fatty acids; and
- between 40 and 95% by weight of solvent.

5. A process according to any one of the preceding claims, such that the composition further comprises one or more emulsifier(s).

6. A process according to any one of the preceding claims, such that the coating composition in addition comprises ethanol.

7. A process according to any one of the preceding claims that includes the fogging step of fogging the said composition at a temperature comprised between 260 and 300°C.

8. A process according to any one of the preceding claims that includes the application of 10 to 200 g of composition per ton of treated fruits and vegetables.

9. A process according to any one of the preceding claims that includes application of the composition within a storage room.

10. A process according to any one of the preceding claims such that the said fruits and vegetables are selected from strawberries and pears.
